# EUROPEAN PATENT APPLICATION

(11) **EP 3 988 199 A1**
(43) Date of publication of application: **27.04.2022**
(21) Application number: 20203094.6
(22) Date of filing: 21.10.2020
(51) Int. Cl.: B01D 53/26, B01D 53/34, B01D 53/38, B01D 53/78, F23J 15/04, F23J 15/06, F23L 15/04

(54) **GRADUAL COOLING AND SIMULTANEOUS CLEANING OF FLUE GASES**

(71) Applicant: Batinas-Geurts, Koen, 6133 BK Sittard (NL); Arpastean, Liviu, 420097 Bistrita (RO)
(72) Inventor: Batinas-Geurts, Koen, 6133 BK Sittard (NL); Arpastean, Liviu, 420097 Bistrita (RO)
(74) Representative: Renkema, Jaap

(57) **Abstract**

The invention relates to a thermal energy generating system (100) comprising i) a first module (1) including a combustion device (10) configured to receive fuel material and to facilitate combustion of the fuel material, ii) a second module (2) including at least one heat exchanger (20) arranged to receive flue gases (12) from the combustion device (10) and configured to enable heat transfer from the flue gases (12) to a primary heat medium (40), and iii) a third module (3) including a wet scrubber (30) arranged to receive the flue gases (12) at a position downstream of the heat exchanger (20) and configured to enable heat transfer from the flue gases (12) to a secondary heat medium (50) and to subsequently let out the flue gases (12). On the basis of this set-up, the thermal energy generating system (100) can facilitate gradual cooling of the flue gases (12).

## Description

### FIELD OF THE INVENTION

The present invention relates to a thermal energy generating system. The present invention also relates to a method of gradually cooling flue gases for the purpose of recovering thermal energy from the flue gases, wherein simultaneous cleaning of the flue gases is achieved, the method involving use of the thermal energy generating system.

### BACKGROUND OF THE INVENTION

Heat recovery from flue gases is usually achieved by applying one or more heat exchanging devices in which the cold return of a heat medium cools the flue gases. One of the most common problems related to solid fuel combustion devices, especially wood log boilers, is that a lot of heat is generated in a short time so that the heat needs to be collected and stored in order to enable continuous heating of spaces including domestic spaces.

A great diversity of heat recovery devices is presently known and available. The most common ones of such heat recovery devices are devices coupled to combustion devices using solid fuels burned under atmospheric conditions (forward flame) or reduced pressure conditions (reversed flame). In many cases, the heat exchanging devices which are applied function to transfer thermal energy as fast as possible to a fluid or gaseous heat medium. This is realized on the basis of a configuration in which a surface of a heat medium conduit is arranged in direct contact with the hot flue gases and/or the flames.

Direct contact of surfaces of heat medium conduits with the hot flue gases may result in the flue gases being cooled too rapidly, thereby leading to negative effects such as extensive fouling phenomena on heat exchanging surfaces, increased concentrations of pollutants in the flue gases, increased corrosion, and efficiency losses. In respect of the fouling, it is noted that it is known to apply cleaning mechanisms relying on moving helical rings, water or electrospray, but cleaning results are unsatisfactory and the cleaning mechanisms prove to be noisy and unreliable. In a more general sense, in respect of the direct contact aspect, it is noted that a thermal shock may occur when a cold heat medium comes in direct contact with flames and/or hot flue gases. The stark difference in temperature of the heat medium and temperature of the flames and/or the hot flue gases causes rapid expansion and contraction of conduits inside for instance a boiler, affecting its tubes, tube sheets, valves, fittings and piping.

In order to prevent thermal shocks, solutions are known in the art according to which direct contact between the heat medium conduit surfaces and the flames and/or flue gases is avoided by shielding the heat medium conduit surfaces from the flames and/or flue gases with protective plates, by placing the heat medium conduits on the outside of the combustion device and the flue gas channels, or by incorporating the heat medium conduits in structural elements.

It is also known from the state of art to insert a condensation heat exchanging device in distinctly different approaches such as directly downstream of the combustion device, downstream of a primary heat exchanging device inside the boiler housing or downstream of a primary heat exchanging device outside the boiler housing. Examples of condensation heat exchanging devices include vapor spray contact heat exchangers and tube-shell design heat exchangers. However, the fact is that there are only a few commercial condensing technologies in the market that are suitable for use with solid fuel combustion devices. A general problem is that recovery of latent heat from a solid fuel combustion device using condensation heat exchanging devices of conventional design is not optimal, while the removal of pollutants from such devices is cumbersome.

Achieving the relatively low temperatures (45°C to 65°C) at which condensation of water vapor from the flue gases occurs actually requires an additional supply of energy for cooling the flue gases to a sufficient extent. For example, the return temperatures as commonly realized by domestic radiators are too high when it comes to creating conditions in which the condensation can take place, so that it is necessary to apply devices such as heat pumps or chillers for the purpose of setting the appropriate condensation conditions.

### SUMMARY OF THE INVENTION

It is an objective of the present invention to provide a thermal energy generating system and a method of cooling flue gases for the purpose of recovering thermal energy from the flue gases, the system and method being suitable to provide improved recovery and storage of specific and latent heat from the flue gases whilst optimizing the burning process and reducing emissions, and also to provide an advantageous construction strategy aimed at achieving full design flexibility and reducing production costs and installation costs of the thermal energy generating system or at least the heat recovery components thereof.

Aspects of the present invention are set out in the accompanying independent and dependent claims. Features from the dependent claims may be combined with features from the independent claim as appropriate and not merely as explicitly set out in the claims.

In view of the foregoing, the present invention provides a thermal energy generating system comprising:
a first module including a combustion device configured to receive fuel material and to facilitate combustion of the fuel material,
a second module including at least one heat exchanger arranged to receive flue gases from the combustion device and configured to enable heat transfer from the flue gases to a primary heat medium, and
a third module including a wet scrubber arranged to receive the flue gases at a position downstream of the heat exchanger and configured to enable heat transfer from the flue gases to a secondary heat medium and to subsequently let out the flue gases.

It follows from the above general definition of the thermal energy generating system according to the present invention that the system is of modular set-up, wherein it is noted that this is to be understood in a functional way rather than a constructional way, so that the present invention covers both integrated designs of the thermal energy generating system, in which the modules can be discerned on the basis of the different functionalities of the components of the system, and designs of the thermal energy generating system in which the system is actually composed of separate modules. It is further noted that the fuel material mentioned in the above general definition may especially be solid fuel material. The terms "downstream" and "upstream" as used in the present text are related to a direction of a flow of flue gases through the thermal energy generating system.

In the thermal energy generating system according to the present invention, the flue gases are gradually cooled down by subsequently enabling transfer of heat from the flue gases to a primary heat medium and transfer of heat from the flue gases to at least a secondary heat medium. In practical cases, it may be so that the primary heat medium is a heat medium included in a heating system of a domestic space, for example, wherein the primary heat medium is subjected to a cycle of being heated at the position of the heat exchanger, being cooled at a functional position in the space on the basis of transfer of heat to the space, and being returned to the heat exchanger for being heated. Further, in practical cases, it may be so that the secondary heat medium is a heat medium for internal use in the thermal energy generating system, wherein the secondary heat medium is subjected to a cycle of being heated at the position of the wet scrubber, being cooled at one or more other positions in the system, and being returned to the wet scrubber for being heated. The set-up of the thermal energy generating system offers a possibility to use the secondary heat medium at further positions in the system for putting the heat obtained from the flue gases to use, such as for the purpose of heating environmental air to be supplied to the combustion device, which has the advantage that cooling of the secondary heat medium can be obtained without a need for additional cooling devices or the like.

A combination of the second module and the third module as defined in the foregoing is suitable to function as heat recovery device, and in view thereof, the present invention also relates to a heat recovery device comprising a second module and a third module, wherein the second module includes at least one heat exchanger arranged to receive flue gases generated in a combustion process and configured to enable heat transfer from the flue gases to a primary heat medium, and wherein the third module includes a wet scrubber arranged to receive the flue gases at a position downstream of the heat exchanger and configured to enable heat transfer from the flue gases to a secondary heat medium and to subsequently let out the flue gases. In another aspect of the present invention, it is possible to have a combination of the first module and the third module as defined in the foregoing, wherein the wet scrubber of the third module is arranged to receive the flue gases at a position downstream of the combustion device of the first module. Further, the present invention relates to the second module as such and the third module as such, respectively, having one or more of the advantageous features as will be discussed in the following.

In an embodiment of the thermal energy generating system according to the present invention, the wet scrubber is configured to receive the flue gases at a bottom position of the wet scrubber. This enables an upward incoming flow of the flue gases, different from known scrubbers which are commonly configured to receive the flue gases at the top. In this way, the wet scrubber can easily be mounted on top of a heat exchanger. When the wet scrubber is configured to induce condensation of water vapor present in the flue gases and to direct the flue gases through condensate as coherent phase, it is practical to have a design of the wet scrubber in which the wet scrubber includes an inlet configured to let in the flue gases to the wet scrubber, a condensate space configured to contain the condensate, and a deflector configured to deflect the flue gases from the inlet to the condensate space. In this way, it is achieved that the condensate can be applied as heat medium for retrieving heat from the flue gases on the basis of direct contact to the flue gases, i.e. as a further heat medium besides the primary heat medium and the secondary medium. Preferably, the inlet extends upwardly in the condensate space towards the deflector.

In an advantageous embodiment, the wet scrubber includes a jacket and a piping arrangement in communication with the jacket, wherein the jacket and the piping arrangement are configured to contain the secondary heat medium and to enable a flow of the secondary heat medium in the wet scrubber, and wherein the piping arrangement extends through the condensate space of the wet scrubber. In this way, a large area of transfer of heat to the secondary medium in the wet scrubber can be realized while a compact design of the wet scrubber is still possible. Also, the risk of thermal shock at the piping arrangement is reduced when compared to a situation in which the piping arrangement would not be surrounded by the condensate. Further, the wet scrubber may be connected to a water system configured to supply rinsing water to the condensate space of the wet scrubber. Especially in combination with the inlet for the flue gases at a bottom position, the water system can effectively be used to overcome the build-up of pollutants and corrosive compounds in the condensate.

In any case, the wet scrubber functions best in conjunction with the at least one heat exchanger at the position upstream of the wet scrubber, which acts to reduce the temperature of the flue gases to a considerable extent. Otherwise constructional measures would need to be taken to avoid that water/condensate in the wet scrubber is simply made to boil and evaporate, which would result in a bulky and impractical design of the wet scrubber. Also, the intended functioning of the wet scrubber can be achieved by supplying the secondary heat medium to the wet scrubber at a temperature that is low enough for inducing condensation of the gaseous water as present in the flue gases.

In respect of the heat exchanger, it is noted that it is advantageous if the heat exchanger includes a heat-insulating mass arranged between an area of the heat exchanger configured to contain the flue gases and to enable a flow of the flue gases in the heat exchanger and an area of the heat exchanger configured to contain the primary heat medium and to enable a flow of the primary heat medium in the heat exchanger. In this respect, it may be so that the heat-insulating mass has heat-accumulating properties.

Having the heat-insulating mass at a position between the flue gases and the primary heat medium contributes to the prevention of thermal shocks. Direct contact between the hot flue gases and the cold heat exchange surfaces of the area where the primary heat medium is present is avoided while efficient heat transfer to the heat primary heat medium is maintained. More specifically, thermal energy is transferred from the hot flue gases to the heat-insulating mass, the thermal energy is accumulated in the heat-insulating mass, and the thermal energy is transferred from the heat-insulating mass to the primary heat medium at a moderate transfer rate. The transfer of thermal energy from the heat-insulating mass to the primary heat medium may continue even after the combustion process has been completed. Further advantages of having the heat-insulating mass at a position between the flue gases and the primary heat medium are that the combustion process can be optimized, that fouling and corrosion rates in the thermal energy generating system are reduced, and that a lower concentration of pollutants in the flue gases can be obtained.

In an embodiment, the thermal energy generating system according to the present invention comprises a ventilator configured to promote a flow of the flue gases in a direction from the first module to the second module to the third module, and arranged at one of a position downstream of the wet scrubber and a position upstream of the wet scrubber, such as a position upstream of the combustion device. In this respect, it may be so that the thermal energy generating system according to the present invention comprises at least two ventilators configured to promote a flow of the flue gases in the direction from the first module to the second module to the third module, wherein one of the at least two ventilators is arranged at a position downstream of the wet scrubber, and wherein another of the at least two ventilators is arranged at a position upstream of the wet scrubber, such as a position upstream of the combustion device.

Using at least one ventilator in the thermal energy generating system may help to displace the flue gases through the system by creating a forced draft under the influence of a pull regime, a push regime, or a push-pull regime, depending on the number and the positioning of the ventilators. Also, use of at least one ventilator may help in having a steady and stable gas flow through the thermal energy generating system and avoiding pressure fluctuations. In the case of a single ventilator, the ventilator is preferably positioned either downstream of the wet scrubber or upstream of the wet scrubber. In the case of at least two ventilators, one of the ventilators may be positioned downstream of the wet scrubber and another of the ventilators may be positioned upstream of the wet scrubber.

When a ventilator is used downstream of the wet scrubber, a pull regime is created by establishing an underpressure exceeding the force requirement for coherent phase displacement in the wet scrubber, whereby the flue gases are forced to flow through the coherent phase (condensate). When a ventilator is used upstream of the wet scrubber, a push regime is created by establishing an overpressure exceeding the force requirement for coherent phase displacement in the wet scrubber, whereby the same effect is achieved. Using at least two ventilators is preferred, one of the at least two ventilators being positioned downstream of the wet scrubber and another of the at least two ventilators being positioned upstream of the wet scrubber. Balancing the pulling underpressure and the pushing overpressure in such a fashion that the combination exceeds the force required for displacement of the coherent phase of the wet scrubber enables the flue gases to flow through the coherent phase under the influence of both pulling and pushing effects.

It is practical if the first module of the thermal energy generating system according to the present invention includes a preheating device configured to generate preheated air by retrieving environmental air and heating the environmental air, and to supply the preheated air to the combustion device. Preheating the air to be used in the combustion process is beneficial to the combustion process. Advantageously, the preheating device is configured to receive the secondary heat medium from the wet scrubber and to enable heat transfer from the secondary heat medium to the environmental air. On the basis of this proposed process of directing recovered thermal energy from the wet scrubber to the preheating device, it is achieved that low-grade sensible and latent heat recovered by the wet scrubber is ultimately recovered as high-grade sensible heat by the heat exchanger. Further, it is achieved that cooling of the secondary heat medium output by the wet scrubber does not require the application of a separate system and that possible efficiency losses in such a separate system are avoided. Routing the secondary heat medium from the wet scrubber to the preheating device and using the environmental air to cool the secondary heat medium can all the more be expected to be effective if the fact that the thermal energy generating system is normally used during relatively cold seasons is taken into account. In view thereof, it is beneficial if the preheating device is configured to retrieve the environmental air from the outside of a building/house etc. in which the thermal energy generating system is installed.

In terms of a method, the present invention relates to a method of gradually cooling flue gases generated by combustion of fuel material for the purpose of recovering thermal energy from the flue gases, the method involving use of the thermal energy generating system as described in the foregoing and comprising:
combusting fuel material in the combustion device of the thermal energy generating system, thereby generating flue gases having a first temperature,
transmitting the flue gases having the first temperature to the at least one heat exchanger of the thermal energy generating system,
decreasing the first temperature of the flue gases to a second temperature in the heat exchanger by enabling heat transfer from the flue gases to a primary heat medium,
transmitting the flue gases having the second temperature to the wet scrubber of the thermal energy generating system, and
decreasing the second temperature of the flue gases to a third temperature in the wet scrubber that is lower than the dew point temperature of the flue gases by enabling heat transfer from the flue gases to at least a secondary heat medium.

In the advantageous case that the thermal energy generating system comprises a preheating device, the method may also comprise:
operating the preheating device of the thermal energy generating system to retrieve environmental air and to receive the secondary heat medium from the wet scrubber of the thermal energy generating system, and
enabling heat transfer from the secondary heat medium to the environmental air.

In respect of the use of the terms "first temperature", "second temperature" and "third temperature", it is noted that these terms are to be understood for their practical meaning. Taking into account the fact that a range of temperatures is normally applicable in practice, the first temperature, second temperature and third temperature are to be understood as being representative of respective ranges of temperatures, which is the case when the first temperature, second temperature and third temperature are average temperatures of the respective ranges of temperatures, for example.

It can be understood that the embodiments of the method according to the present invention may relate to use of a thermal energy generating system having any of the features or combinations of features that are disclosed herein in connection with discussions of the thermal energy generating system according to the present invention. Accordingly, the aspects of the earlier discussions of the thermal energy generating system are also applicable when the present invention is expressed in the terms of the method.

On the basis of the foregoing explanation of the present invention, it is found that the benefits of applying the present invention include the following:
1) high nominal power recovery efficiency / improved thermal output through a high extent of recovery of specific and latent heat of the flue gases,
2) greatly reduced thermal differential between flames/hot flue gases of the combustion process and heat exchanger surface resulting in that considerably less pollution formation and fouling take place in the thermal energy generating system and/or a chimney connected to the thermal energy generating system,
3) reduction of the emission of particulate matter and volatile organic compounds,
4) reduction of fuel consumption,
5) minimalization or prevention of abrasion and corrosion of structural metal parts as contact with solid particles entrained in the hot flue gases is avoided,
6) no risk of explosion due to thermal shock,
7) no risk of condensation of water on the heat exchanger during the various stages of the burning process,
8) highly efficient and practical low temperature heat recovery (specific and latent heat),
9) no build-up of pollutants in the wet scrubber, and
10) easy mounting of the wet scrubber on top of the heat exchanger as connected to the combustion device.

### BRIEF DESCRIPTION OF THE DRAWINGS

Further features and advantages of the present invention will become apparent from the description of the present invention by way of exemplary and non-limiting embodiments of a thermal energy generating system.

The person skilled in the art will appreciate that the described embodiments of the system according to the present invention are exemplary in nature only and not to be construed as limiting the scope of protection in any way. The person skilled in the art will realize that alternatives and equivalent embodiments of the system can be conceived and reduced to practice without departing from the scope of protection of the present invention.

Reference will be made to the figures on the accompanying drawing sheets. The figures are schematic in nature and therefore not necessarily drawn to scale. Further, equal reference numerals denote equal or similar parts. On the attached drawing sheets,
figure 1 illustrates a thermal energy generating system in accordance with an embodiment of the present invention;
figure 2 illustrates a set-up of a heat exchanger in accordance with an embodiment of the present invention; and
figure 3 illustrates a flow chart of a method of gradually cooling flue gases generated by combustion of fuel material in accordance with an embodiment of the present invention.

### DETAILED DESCRIPTION OF EMBODIMENTS

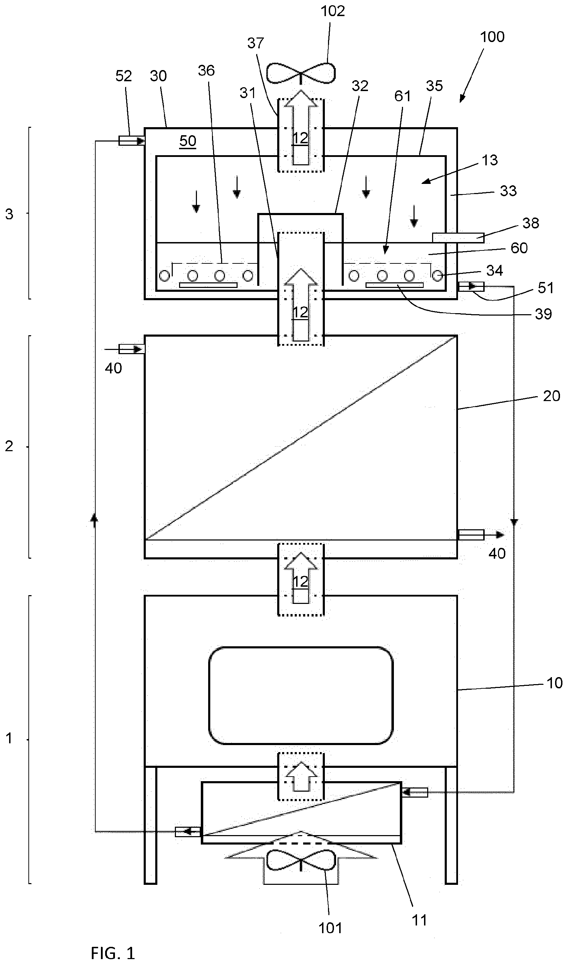

Figure 1 illustrates an exemplary thermal energy generating system 100 according to an embodiment of the present invention and diagrammatically depicts the thermal energy generating system 100 in a normal, operational orientation. The thermal energy generating system 100 comprises a first module 1 including a combustion device 10 and a preheating device 11, a second module 2 including a heat exchanger 20, and a third module 3 including a wet scrubber 30. The respective modules 1, 2, 3 may be physically connected to each other, for example through suitable conduit arrangements, but this is not essential in the framework of the present invention.

In the first module 1, the combustion device 10 is configured to receive a fuel material such as wood and to facilitate a combustion process of the fuel material. Practical examples of the combustion device 10 include fireplaces and woodburning boilers and stoves. The preheating device 11 is configured to generate preheated air by retrieving environmental air and heating the environmental air, and to supply the preheated air to the combustion device 10 so that it can be used in the combustion process. The thermal energy needed in the process is supplied from within the thermal energy generating system 100, as will be explained later. Flue gases 12 are generated as a result of the combustion process. A flow of the flue gases 12 through the thermal energy generating system 10 is indicated by means of large upward arrows in figure 1.

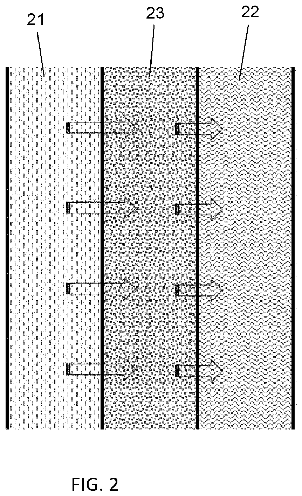

In the second module 2, the heat exchanger 20 is arranged to receive the flue gases 12 from the combustion device 10. As indicated in figure 2, the heat exchanger 20 includes an area 21 configured to contain the flue gases 12 and to enable a flow of the flue gases 12 in the heat exchanger 20 and an area 22 configured to contain a primary heat medium 40 and to enable a flow of the primary heat medium 40 in the heat exchanger 20, and the heat exchanger 20 functions to enable indirect heat transfer from the flue gases 12 to the primary heat medium 40, which implies that the flue gases 12 and the primary heat medium 40 are not in direct contact with each other in the heat exchanger 20. The primary heat medium 40 can be a heat medium that is included in a domestic or industrial heating system comprising one or more radiators, for example, and that is made to flow to the heat exchanger 20 for retrieving heat from the flue gases 12. In a more general sense, the heat exchanger 20 functions as a first stage of a heat recovery device and acts to decrease the temperature of the flue gases 12.

In the third module 3, the wet scrubber 30 is arranged to receive the flue gases 12 from the heat exchanger 20. In particular, the wet scrubber 30 is configured to receive the flue gases 12 at a bottom position of the wet scrubber 30. In the shown example, the wet scrubber 30 includes an inlet 31 that is arranged to enable an upward incoming flow of the flue gases 12. The wet scrubber 30 is configured to induce condensation of water vapor present in the flue gases 12 and to direct the flue gases 12 through condensate 60 as coherent phase. The wet scrubber 30 includes a condensate space 61 configured to contain the condensate 60, and also includes a deflector 32 configured to deflect the flue gases 12 from the inlet 31 to the condensate space 61, so that the flue gases 12 are made to flow through the condensate 60 first after having entered the wet scrubber 30. The inlet 31 extends upwardly in the condensate space 61 towards the deflector 32.

The wet scrubber 30 further includes a jacket 33 and a piping arrangement 34 in communication with the jacket 33, wherein the jacket 33 and the piping arrangement 34 are configured to contain a secondary heat medium 50 and to enable a flow of the secondary heat medium 50 in the wet scrubber 30. The piping arrangement 34 extends through the condensate space 61 of the wet scrubber 30. Besides the condensate space 61, the wet scrubber 30 includes a gas space 13 above the condensate space 61, delimited by a gas cap 35. In the shown example, the wet scrubber 30 also includes a sparger plate 36 arranged in the condensate space 61, at a position above the piping arrangement 34. During operation, the flue gases 12 bubble through the sparger plate 36 and the condensate 60 in an upward direction, towards the gas space 13. In the process, condensation of water vapor present in the flue gases takes place. The fact is that under the influence of heat transfer to both the secondary heat medium 50 and the condensate 60, the temperature of the flue gases 12 is reduced to below the dew point temperature of the flue gases 12. The flue gases 12 are let out at this reduced temperature from the thermal energy generating system 100 through an outlet 37 of the wet scrubber 30.

In the shown example, the wet scrubber 30 further comprises a condensate overflow drainage 38 so that the water level in the condensate space 61 is limited to a predetermined level. Further, it is practical if the wet scrubber 30 is connected to a water system 39 configured to supply rinsing water to the condensate space 61. In a general sense, the wet scrubber 30 functions as a second stage of a heat recovery device in the thermal energy generating system 100, and acts to further decrease the temperature of the flue gases 12 after the flue gases 12 have passed the heat exchanger 20.

The secondary heat medium 50 is routed through the thermal energy generating system 100 from the wet scrubber 30 to the preheating device 11 and back, as indicated through lines at the left and right side of figure 1, wherein the direction of the flow of the secondary heat medium 50 is indicated by means of arrows. The jacket 33 of the wet scrubber 30 has an outlet 51 for letting out the secondary heat medium 50 and an inlet 52 for letting in the secondary heat medium 50. In the preheating device 11, beneficial effects of heat transfer from the secondary heat medium 50 to the environmental air are obtained, wherein the environmental air is heated and the secondary heat medium 50 is cooled.

In the shown example, the thermal energy generating system 100 comprises two ventilators 101, 102 configured to promote a flow of the flue gases 12 in a direction from the first module 1 to the second module 2 to the third module 3. As shown in Figure 1, a first ventilator 101 is arranged at a position upstream of the combustion device 10, and a second ventilator 102 is arranged at a position downstream of the wet scrubber 30. The first ventilator 101 is configured to create a push force on the flue gases 12 by establishing an overpressure exceeding the force required for coherent phase displacement in the wet scrubber 30, thereby enabling the flue gases 12 to flow through the condensate 60 in the wet scrubber 30. Likewise, the second ventilator 102 is configured to create a pull force on the flue gases 12 by establishing an underpressure exceeding the force required for coherent phase displacement in the wet scrubber 30.

Figure 2 illustrates a set-up of the heat exchanger 20 in accordance with an embodiment of the present invention. As mentioned in the foregoing, the heat exchanger 20 includes an area 21 configured to contain the flue gases 12 and to enable a flow of the flue gases 12 in the heat exchanger 20 and an area 22 configured to contain a primary heat medium 40 and to enable a flow of the primary heat medium 40 in the heat exchanger 20. The heat exchanger 20 further includes a heat-insulating mass 23 that is arranged between the two areas 21, 22 as mentioned. The heat-insulating mass 23 preferably consists of material that is selected from a group of materials having heat-accumulating properties, such as ceramics. In that way, various advantages are obtained, including the advantage of prevention of all too fast heat exchange between the flue gases 12 and the primary heat medium 40, as the heat exchange takes place through the heat-insulating mass 23, and the thermal energy is transferred to the primary heat medium 40 at a moderate transfer rate.

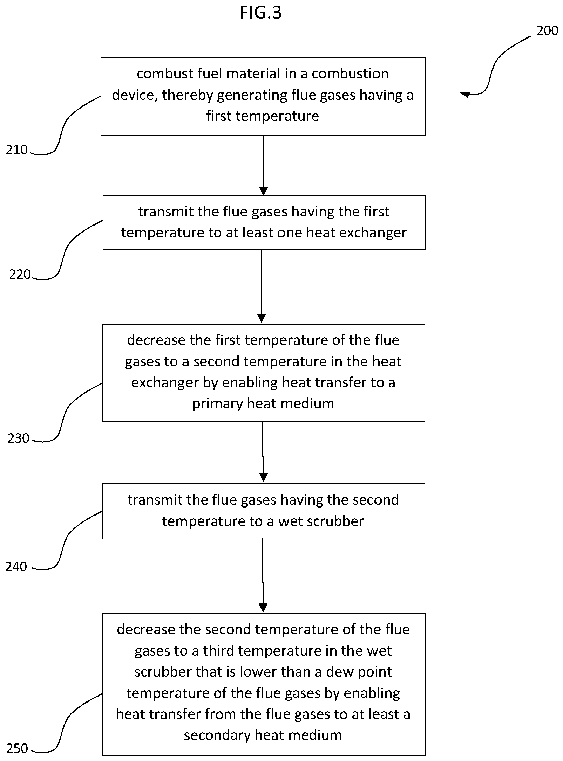

Figure 3 is a flow chart of a method showing an example 200 of gradually cooling the flue gases 12 in the thermal energy generating system 100. The example 200 of the method starts at step 210.

Step 210 of the method 200 includes combusting fuel material om the combustion device 10, thereby generating flue gases 12 having a first temperature. Step 220 of the method 200 includes transmitting the flue gases 12 having the first temperature to the at least one heat exchanger 20. Step 230 of the method 200 includes decreasing the first temperature of the flue gases 12 to a second temperature in the heat exchanger 20 by enabling heat transfer to a primary heat medium 40. Step 240 of the method 200 includes transmitting the flue gases 12 having the second temperature to the wet scrubber 30. Step 250 of the method 200 includes decreasing the second temperature of the flue gases 12 to a third temperature in the wet scrubber 30, wherein the third temperature of the flue gases 12 is lower than the dew point temperature of the flue gases 12. This is done by enabling heat transfer from the flue gases 12 to a secondary heat medium 20. Also, as follows from the explanation of the configuration of the wet scrubber 30 in the foregoing, the condensate 60 as present in the wet scrubber 30 acts as a heat medium. The fact is that the flue gases 12 are made to flow through the condensate 60 after entry in the wet scrubber 30, and that heat is transferred from the flue gases 12 to the secondary heat medium 50 at the position of a bottom portion of the jacket 33 and the piping arrangement 34 in a first instance, through the condensate 60. In the gas space 13 of the wet scrubber 30, heat from the flue gases 12 is directly transferred to the secondary heat medium 50 in the jacket 33. The method 200 may then end at step 250.

With reference to the above-described embodiment of the thermal energy generating system 100, it is noted that the method may further include using the secondary heat medium 50 that exits the wet scrubber 30 to heat environmental air in the preheating device 11. Also, it is possible to use the secondary heat medium 50 that exits the wet scrubber 30 to supply heat at other positions in the thermal energy generating system 100.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the present invention may be made. An aspect of the present invention may be further advantageously enhanced by adding a feature that was described in relation to another aspect of the present invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

Notable aspects of the present invention are summarized as follows. The present invention relates to a thermal energy generating system 100 comprising i) a first module 1 including a combustion device 10 configured to receive fuel material and to facilitate combustion of the fuel material, ii) a second module 2 including at least one heat exchanger 20 arranged to receive flue gases 12 from the combustion device 10 and configured to enable heat transfer from the flue gases 12 to a primary heat medium 40, and iii) a third module 3 including a wet scrubber 30 arranged to receive the flue gases 12 at a position downstream of the heat exchanger 20 and configured to enable heat transfer from the flue gases 12 to a secondary heat medium 50 and to subsequently let out the flue gases 12. On the basis of this set-up, the thermal energy generating system 100 can facilitate gradual cooling of the flue gases 12, eventually to a temperature below the dew point temperature without a need for additional cooling devices or the like. The present invention is applicable in various settings, including residential and industrial building settings.

### REFERENCE LIST

- 100: Thermal energy generating system
- 101: Ventilator
- 102: Ventilator
- 1: First module
- 2: Second module
- 3: Third module
- 10: Combustion device
- 11: Preheating device
- 12: Flue gases
- 13: Gas space
- 20: Heat exchanger
- 21: Flue gas area of the heat exchanger
- 22: Primary heat medium area of the heat exchanger
- 23: Heat-insulating mass of the heat exchanger
- 30: Wet scrubber
- 31: Inlet of the wet scrubber
- 32: Deflector
- 33: Jacket
- 34: Piping arrangement
- 35: Gas cap
- 36: Sparger plate
- 37: Outlet of the wet scrubber
- 38: Condensate overflow drainage
- 39: Water system
- 40: Primary heat medium
- 50: Secondary heat medium
- 51: Secondary heat medium outlet of the wet scrubber
- 52: Secondary heat medium inlet of the wet scrubber
- 60: Condensate
- 61: Condensate space

## Claims

1. A thermal energy generating system (100) comprising:
- a first module (1) including a combustion device (10) configured to receive fuel material and to facilitate combustion of the fuel material,
- a second module (2) including at least one heat exchanger (20) arranged to receive flue gases (12) from the combustion device (10) and configured to enable heat transfer from the flue gases (12) to a primary heat medium (40), and
- a third module (3) including a wet scrubber (30) arranged to receive the flue gases (12) at a position downstream of the heat exchanger (20) and configured to enable heat transfer from the flue gases (12) to a secondary heat medium (50) and to subsequently let out the flue gases (12).

2. The thermal energy generating system (100) according to claim 1, wherein the wet scrubber (30) is configured to receive the flue gases (12) at a bottom position of the wet scrubber (30).

3. The thermal energy generating system (100) according to claim 1 or 2, wherein the wet scrubber (30) is configured to induce condensation of water vapor present in the flue gases (12) and to direct the flue gases (12) through condensate (60) as coherent phase.

4. The thermal energy generating system (100) according to claim 3, wherein the wet scrubber (30) includes an inlet (31) configured to let in the flue gases (12) to the wet scrubber (30), a condensate space (61) configured to contain the condensate (60), and a deflector (32) configured to deflect the flue gases (12) from the inlet (31) to the condensate space (61).

5. The thermal energy generating system (100) according to claim 4, wherein the wet scrubber (30) includes a jacket (33) and a piping arrangement (34) in communication with the jacket (33), wherein the jacket (33) and the piping arrangement (34) are configured to contain the secondary heat medium (50) and to enable a flow of the secondary heat medium (50) in the wet scrubber (30), and wherein the piping arrangement (34) extends through the condensate space (61) of the wet scrubber (30).

6. The thermal energy generating system (100) according to claim 4 or 5, wherein the wet scrubber (30) is connected to a water system (39) configured to supply rinsing water to the condensate space (61) of the wet scrubber (30).

7. The thermal energy generating system (100) according to any of claims 1-6, wherein the heat exchanger (20) includes a heat-insulating mass (23) arranged between an area (21) of the heat exchanger (20) configured to contain the flue gases (12) and to enable a flow of the flue gases (12) in the heat exchanger (20) and an area (22) of the heat exchanger (20) configured to contain the primary heat medium (40) and to enable a flow of the primary heat medium (40) in the heat exchanger (20).

8. The thermal energy generating system (100) according to claim 7, wherein the heat-insulating mass (23) has heat-accumulating properties.

9. The thermal energy generating system (100) according to any of claims 1-8, comprising a ventilator (101, 102) configured to promote a flow of the flue gases (12) in a direction from the first module (1) to the second module (2) to the third module (3), and arranged at one of a position downstream of the wet scrubber (30) and a position upstream of the wet scrubber (30).

10. The thermal energy generating system (100) according to any of claims 1-9, comprising at least two ventilators (101, 102) configured to promote a flow of the flue gases (12) in a direction from the first module (1) to the second module (2) to the third module (3), wherein one of the at least two ventilators (101, 102) is arranged at a position downstream of the wet scrubber (30), and wherein another of the at least two ventilators (101, 102) is arranged at a position upstream of the wet scrubber (30).

11. The thermal energy generating system (100) according to any of claims 1-10, wherein the first module (1) includes a preheating device (11) configured to generate preheated air by retrieving environmental air and heating the environmental air, and to supply the preheated air to the combustion device (10).

12. The thermal energy generating system (100) according to claim 11, wherein the preheating device (11) is configured to receive the secondary heat medium (50) from the wet scrubber (30) and to enable heat transfer from the secondary heat medium (50) to the environmental air.

13. A method (200) of gradually cooling flue gases (12) generated by combustion of fuel material for the purpose of recovering thermal energy from the flue gases (12), the method involving use of the thermal energy generating system (100) according to any of claims 1-13 and comprising:
- combusting (210) fuel material in the combustion device (10) of the thermal energy generating system (100), thereby generating flue gases (12) having a first temperature,
- transmitting (220) the flue gases (12) having the first temperature to the at least one heat exchanger (20) of the thermal energy generating system (100),
- decreasing (230) the first temperature of the flue gases to a second temperature in the heat exchanger (20) by enabling heat transfer from the flue gases (12) to a primary heat medium (40),
- transmitting (240) the flue gases (12) having the second temperature to the wet scrubber (30) of the thermal energy generating system (100), and
- decreasing (250) the second temperature of the flue gases (12) to a third temperature in the wet scrubber (30) that is lower than the dew point temperature of the flue gases (12) by enabling heat transfer from the flue gases (12) to at least a secondary heat medium (50).

14. The method (200) according to claim 13, involving the use of the thermal energy generating system (100) according to claim 13 and comprising:
- operating the preheating device (11) of the thermal energy generating system (100) to retrieve environmental air and to receive the secondary heat medium (50) from the wet scrubber (30) of the thermal energy generating system (100), and
- enabling heat transfer from the secondary heat medium (50) to the environmental air.
